(19) Europäisches Patentamt / European Patent Office / Office européen des brevets

(11) **EP 3 432 179 B1**

(12) **EUROPEAN PATENT SPECIFICATION**

(45) Date of publication and mention
of the grant of the patent:
**30.08.2023 Bulletin 2023/35**

(21) Application number: **18181466.6**

(22) Date of filing: **03.07.2018**

(51) International Patent Classification (IPC):
**G06F 21/30** (2013.01)     **H04B 5/00** (2006.01)
**H04L 9/32** (2006.01)      **H04L 9/40** (2022.01)
**H04W 12/06** (2021.01)     **H04W 4/80** (2018.01)
**G06Q 30/018** (2023.01)

(52) Cooperative Patent Classification (CPC):
**G06Q 30/018; G06F 21/30; H04B 5/0062;
H04L 9/3247; H04L 9/3268; H04L 63/08;
H04W 12/06;** G06Q 2220/00; H04L 2209/34;
H04L 2209/805; H04M 2250/04

(54) **SECURITY TAG AND ELECTRONIC SYSTEM USABLE WITH MOLDED CASE CIRCUIT BREAKERS**

SICHERHEITSETIKETT UND ELEKTRONISCHES SYSTEM, VERWENDBAR MIT GEHÄUSESCHUTZSCHALTERN

ÉTIQUETTE DE SÉCURITÉ ET SYSTÈME ÉLECTRONIQUE UTILISABLES AVEC DES DISJONCTEURS À BOÎTIER MOULÉ

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **18.07.2017 US 201715652540**

(43) Date of publication of application:
**23.01.2019 Bulletin 2019/04**

(73) Proprietor: **Eaton Intelligent Power Limited
Dublin 4 (IE)**

(72) Inventors:
• **GAO, Zhi**
  **Warrendale, PA Pennsylvania 15086 (US)**
• **MILLER, Theodore J.**
  **Oakdale, PA Pennsylvania 15071 (US)**
• **THOMPSON, Timothy F.**
  **Pittsburgh, PA Pennsylvania 15241 (US)**
• **SHVACH, Randy P.**
  **Conway, PA Pennsylvania 15027 (US)**
• **HOSKO, Daniel A.**
  **Pittsburgh, PA Pennsylvania 15086 (US)**

(74) Representative: **Novagraaf Group
Chemin de l'Echo 3
1213 Onex / Geneva (CH)**

(56) References cited:
EP-A1- 2 479 775          US-A1- 2006 132 311
US-A1- 2006 230 276       US-A1- 2013 303 085
US-A1- 2014 252 077       US-A1- 2015 317 151
US-B1- 8 587 411          US-B1- 8 941 469
US-B1- 9 405 945          US-B2- 8 730 015

• Epc Global Inc.: "EPC Radio-Frequency Identity Protocols Generation-2 UHF RFID Specification for RFID Air Interface, Protocol for Commnuications at 860MHz-960MHz, Version 2.0.0 Ratified", , 1 November 2013 (2013-11-01), pages 1-152, XP055164148, Retrieved from the Internet: URL:http://www.gs1.org/sites/default/files /docs/uhfc1g2/uhfc1g2_2_0_0_standard_20131 101.pdf [retrieved on 2015-01-22]

**Description**

BACKGROUND

Field

The present invention describes a security tag and electronic system structured to detect unauthorized tampering of molded-case circuit breakers (MCCBs) and authenticate MCCBs against counterfeiting or gray market items and, more particularly, the security tag and electronic system are related to digitally generating paired public and private keys, applying the private key and creating a digital signature code, generating an identification code and building it into one or more security tags to attach to MCCBs, and authenticating MCCBs through a verification step and a certification step based on the identification code in the one or more security tags and the public key.

Related art

Molded-case circuit breakers (MCCBs) and other circuit interruption devices are designed to provide circuit protection for power distribution systems. They safeguard connected electrical devices against current overloads and short circuits. They protect people and equipment in the field.

MCCBs purchased from unauthorized online resellers and unauthorized local dealers are often of unknown conditions and origins. Those MCCBs, despite being frequently advertised as "new," may turn out to be reconditioned or altered. They may even be counterfeit products that are mixed with genuine MCCBs. Even for genuine MCCBs, they may be sold outside an original MCCB manufacturer's authorized reseller channels, i.e., in gray market commerce, and thus void any product warranty and services offered by the original MCCB manufacturer. It is obvious that the sourcing practices of unauthorized resellers and brokers expose users to substantial risks of lost production revenues, as well as potential risks and liability (National Electrical Manufacturers Association, Authentication Technologies for Brand Protection, https://www.nema.org/Policy/Anti-Counterfeiting/Documents/
Authentication_Technologies_for_Brand_Protection_4 web.pdf).

Tampering

MCCBs are not designed for modification, service, or refurbishing outside of the original MCCB manufacturer operated facilities. Unfortunately the practice of third-party reconditioning, using scavenged or counterfeited parts, is widespread in many places. This type of product tampering also often involves removal of the original MCCB manufacturer's marks, such as date codes, lot codes, serial numbers, universal product codes (UPCs), etc., and re-labeling of those marks with fake ones, in an effort to disguise the source or age of the reconditioned or altered MCCBs.

Counterfeits

Counterfeit MCCBs refer to either newly manufactured fake MCCBs, or refurbished genuine MCCBs with counterfeit packaging, marks, or labeling. They are produced with the intent to take advantage of the superior value of the new and genuine MCCB products.

The proliferation of counterfeit MCCBs affects almost all well-known MCCB manufacturers in the electrical industry. Counterfeit MCCBs are hard to spot, and thus often avoid detection. Because they are inherently unsafe, the counterfeit MCCBs pose a real safety hazard to any site where they are installed and put users at risk.

Gray Market

A gray market of MCCBs refers to the sale of genuine MCCBs by independent resellers or dealers who do not have formal distribution agreements with the original MCCB manufacturer. MCCBs purchased from gray market resellers may be new but may have been acquired through channels outside of normal authorized distribution channels and policies, and thus do not come with original MCCB manufacturer's standard warranty and services. Due to sourcing practices, MCCBs purchased from a gray market reseller are also more likely to receive old surplus, scavenged or reconditioned products. Because of this reason, MCCBs purchased from gray market resellers may put customer's health and safety at risk.

Challenges Using Conventional Authentication Systems and Methods

Tampered, counterfeit, and gray-market MCCBs are hard to spot. Ordinary users may not have sufficient technical knowledge and experience to authenticate those MCCBs or detect any unauthorized product tampering. Presently, ordinary users rely on date code, quality and process control (QPC) code, labeling, and a combination of those data to authenticate those MCCBs or detect unauthorized product tampering.

Authentication via Date Code

The original MCCB manufacturer often stamps the date of manufacture, i.e., date code, on the MCCBs. For example, the date code is often stamped along with other product-related information on the front of an MCCB.

For tampered, counterfeit, and gray-market MCCBs, this date code is removed to hide the age of the MCCB. This is because any product over two years old no longer has any factory warranty unless specified otherwise.

Authentication via QPC Code

The QPC code is used by the original MCCB manufacturer in manufacturing process to ensure product quality. The QPC code is often a bar code label along with a numeric code that contains the MCCB's quality-related information at the time of manufacture. This bar code allows identification through commerce. For tampered, counterfeit, and gray-market MCCBs, this QPC code is often missing or forged.

Authentication via Labeling

The labeling is another method to authenticate MCCBs. The following is a list of commonly used methods to identify non-genuine MCCBs.

- Factory seals broken or removed. This indicates that product has been tampered with. Therefore, the product has no warranty or guarantee that it meets performance specifications.
- Mislabeled products to change size/type. This indicates that product has been tampered with, causing a possible misapplication and a safety hazard.
- Missing Underwriters Laboratories (UL) sticker. This indicates that the product is likely imported illegally and is not certified to meet U.S. national electrical codes.
- Low-quality labeling and/or misspelled words. This indicates that product is likely a counterfeit and made with substandard materials and workmanship.

Authentication via Circuit Breaker Authentication Tools

Some MCCB manufacturers use circuit breaker authentication tools to authenticate their MCCBs. The circuit breaker authentication tools often use a combination of MCCB's style number, date code and QPC code to authenticate. The style number is a string of alphanumeric characters from the original MCCB manufacturer's catalog that shows MCCB information, such as voltage rating, interrupting current rating, etc. For example, a style number of Eaton 6629C90G16 is associated with an Eaton Series C, F-frame MCCB.

While it is useful to authenticate MCCBs using date code, QPC code, labeling, or a combination of various data, it still requires users to have a high level of understanding of such codes and labels. Unauthorized third-party may affix labeling from other salvaged genuine MCCBs to the tampered MCCBs to avoid being detected. It is often difficult for ordinary users to identify forged codes or labeling without spending a tremendous amount of effort. Improvement thus would be desirable.

Attention is drawn to US 2014 252 077 A1, which relates to an anti-counterfeiting system and method, in which a set of identification codes are generated from data associated with units of a line of items. A manufacturer affixes machine readable forms of such identification codes to units of an item, and scans or reads the affixed identification codes before distribution of the units in order to flag only affixed identification codes as "active". Thereafter, when a user scans or reads the machine readable form of an affixed identification code from a unit of some item, such as by using a "smart phone", the identification code value is transmitted for verification and validation, and subjected to selected computer based tests to determine the authenticity of the identification code and thus of the associated unit. The user may be provided with feedback as to the genuineness of the unit.

US 8 941 469 B1, US 8 587 411 B1 and the specification "EPC Radio-Frequency Identity Protocols Generation-2 UHF RFID Specification for RFID Air Interface, Protocol for Commnuications at 860MHz-960MHz, Version 2.0.0 Ratified", 1 November 2013, are further relevant prior art documents.

SUMMARY

An improved security tag and electronic system detect unauthorized tampering of MCCBs and authenticate MCCBs against counterfeiting or gray market items. The security tag and electronic system can be generally said to involve a number of operations. As employed herein, the expression "a number of" and variations thereof shall refer broadly to an non-zero quantity, including a quantity of one. The steps can include:

- digital generation of paired public and private keys - - the paired public and private keys include a public key and a corresponding private key wherein both keys comprise large positive integers;
- applying the private key to an MCCB-specific message string and creating a digital signature code;
- generating an identification code from the MCCB-specific message string and the digital signature code, building the identification code into one or more security tags, and installing the security tags on MCCBs;
- authenticating MCCBs through a verification step and a certification step.

The verification step reads the security tags, and verifies the identification code.
The certification step checks the identification code against a revocation list that contains previously compromised identification codes.

Accordingly, an aspect of the disclosed and claimed concept is that by incorporating the digital signature code into the MCCB, this invention provides traceability of original MCCB manufacturer's products.

Another aspect of the disclosed and claimed concept is that successful verification and certification give users confidence to trust the MCCBs' integrity and authenticity.

Another aspect of the disclosed and claimed concept is that users can further detect whether the MCCBs are potential gray market items by examining the contents of valid identification codes.

Another aspect of the disclosed and claimed concept is that it helps reduce the amount of effort that ordinary users have to spend when determining the MCCB's integrity and authenticity.

Another aspect of the disclosed and claimed concept is that it helps reduce or eliminate risks, liabilities, safety- and performance-related issues, and even a complete business shutdown that may occur when using tampered, counterfeit or gray-market MCCBs.

Accordingly, an aspect of the disclosed and claimed concept is to provide an improved security tag that is structured to be affixed to a questioned device and that is structured to enable a verification of genuineness of the questioned device. The security tag can be generally stated as including a substrate structured to be affixed to the questioned device, the substrate comprising a data storage area structured to store data thereon, and an identification code stored in the data storage area, the identification code can be generally stated as including a data string and a signature code, the data string being specific to the questioned device, the signature code being based at least in part upon the data string and a private key, the private key and a public key being generated contemporaneously by an asymmetric key generation algorithm, the private key and the public key corresponding with one another, the data string being structured to be subjected to a hash operation to result in a message digest, the signature code being structured to be subjected to a decryption operation with the use of the public key to result in another message digest wherein: if the message digest and the another message digest are the same, the identification code is structured to be used to verify the questioned device as being genuine, and if the message digest and the another message digest are not the same, the identification code is structured to be used to identify the questioned device as being other than genuine.

Another aspect of the disclosed and claimed concept is to provide an improved machine readable storage medium comprising a number of instructions which, when executed on a processor of an electronic device, cause the electronic device to perform operations that can be generally stated as including reading from a security tag affixed to a questioned device an identification code that comprises a data string and a signature code, the data string being specific to the questioned device, the signature code being based at least in part upon the data string and a private key, the private key and a public key being generated contemporaneously by an asymmetric key generation algorithm, the private key and the public key corresponding with one another, subjecting the data string to a hash operation to result in a message digest, subjecting the signature code to a decryption operation with the use of the public key to result in another message digest, responsive to a determination that the message digest and the another message digest are the same, verifying the questioned device as being genuine, and responsive to a determination that the message digest and the another message digest are not the same, identifying the questioned device as being other than genuine.

Another aspect of the disclosed and claimed concept is to provide an improved electronic system having a processor apparatus that comprises a processor and a storage and being structured to communicate with an electronic device regarding a security tag that comprises an identification code and that is affixed to a questioned device, the storage having stored therein a number of instructions which, when executed on the processor, cause the electronic system to perform operations that can be generally stated as including receiving from the electronic device at least a portion of the identification code, comparing the at least portion of the identification code with a revocation list that is stored in the storage and that comprises information representative of a number of devices whose genuineness has been compromised and, based at least in part upon the comparing, communicating to the electronic device a response that includes data representative of one of: the genuineness of the questioned device being confirmed, and the genuineness of the questioned device having been compromised. The invention is defined by the appended independent claims.

BRIEF DESCRIPTION OF THE DRAWINGS

A further understanding of the disclosed and claimed concept can be gained from the following Description when read in conjunction with the accompanying drawings in which:

Fig. 1 is a block diagram illustrating system and method to detect unauthorized tampering of MCCBs and authenticate MCCBs against counterfeiting or gray market items;
Fig. 2 is a block diagram illustrating creation of a digital signature code;
Fig. 3 is a depiction of a security tag in accordance with a first embodiment of the disclosed and claimed concept showing the contents of an identification code stored thereon;
Fig. 4 is an installation of a number of the security tags of Fig. 3 onto an MCCB;
Fig. 5 is a block diagram illustrating a number of steps to verify the identification code on the security tag of Fig. 3; and
Fig. 6 is a depiction of a security tag in accordance with a second embodiment the disclosed and claimed concept showing the contents of an identification code stored thereon, and further depicting an electronic device optically scanning the security tag and communicating the identification code to an electronic system remote therefrom.

Similar numerals refer to similar parts throughout the specification.

DESCRIPTION

Generate Paired Public and Private Keys

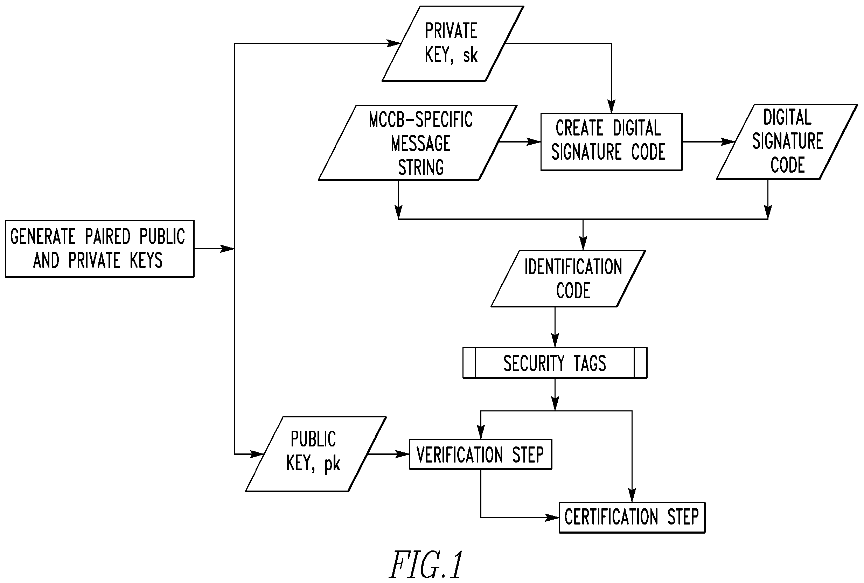

First, and as can be seen in Fig. 1, an asymmetric key generation algorithm is used to generate a public key, *pk*, and a corresponding private key, *sk*. The public key, *pk*, and the corresponding private key, *sk*, consist of large positive integers. The public key, *pk*, is different from the corresponding private key, *sk*, due to the use of asymmetric key generation algorithm. The public key and the corresponding private key form paired public and private keys *pk*, *sk*.

There are a number of different asymmetric key generation algorithms that can be used to generate the paired public and private keys (IEEE Standard Specifications for Public-Key Cryptography, IEEE Std. 1363-2000, Jan. 2000), such as RSA algorithm (R. L. Rivest, A. Shamir, and L. Adleman, "A method for obtaining digital signatures and public-key cryptosystems," Communications of the ACM, vol. 21, no. 2, pp. 120-126, Feb. 1978), (R. L. Rivest, A. Shamir, and L. M. Adleman, "Cryptographic communications system and method," U.S. Patent 4 405 829, Sep. 20, 1983), elliptic curve cryptography (ECC) (N. Koblitz, "Elliptic curve cryptosystems," Mathematics of Computation, vol. 48, no. 177, pp. 203-209, Jan. 1987), (V. S. Miller, "Use of elliptic curves in cryptography," Lecture Notes in Computer Science, vol. 218 on Advances in Cryptology - CRYPTO 85, pp. 417-426, Springer-Verlag: New York, NY, USA, 1985), and digital signature algorithm (DSA) (D. W. Kravitz, "Digital signature algorithm," U.S. Patent 5 231 668, July 26, 1991). Note that asymmetric key generation algorithms use mathematical formulas that currently admit no efficient solutions. In this way, anyone who gets hold of a public key, *pk*, cannot efficiently guess the corresponding private key, *sk*. When an appropriate asymmetric cryptography system is used, data encrypted with the private key, *sk*, from the paired public and private keys *pk*, *sk* can only be decrypted using the public key, *pk*, from the same paired public and private keys.

When the large positive integers in the paired public and private keys *pk*, *sk* are represented in computer number format, they take certain number of bits, such as 256 or 512 bits. A 256-bit number is smaller in size than a 512-bit number. Generally speaking, at the same level of security, paired public and private keys generated from ECC are smaller in size than those generated from the RSA algorithm. A small-sized number requires less storage and transmission time.

In this invention, an MCCB manufacturer generates paired public and private keys *pk*, *sk*, and publishes the public key, *pk*, openly through trustworthy channels, such as through the MCCB manufacturer's official website, or through software programs or mobile apps authorized by the MCCB manufacturer. Meanwhile, the MCCB manufacturer holds the private key, *sk*, and never discloses it.

The MCCB manufacturer may also choose to generate a series of unique paired public and private keys, and associate each paired set of public and private keys with MCCBs manufactured during a specific and non-overlapping time period. For example, the MCCB manufacturer may generate a total of four unique paired public and private keys: *pk*1, *sk*1, *pk*2, *sk*2, *pk*3, *sk*3, and *pk*4, *sk*4, and may

- associate *pk*1, *sk*1 with MCCBs manufactured during the first quarter of a given year;
- associate *pk*2, *sk*2 with MCCBs manufactured during the second quarter of the given year;
- associate *pk*3, *sk*3 with MCCBs manufactured during the third quarter of the given year;
- associate *pk*4, *sk*4 with MCCBs manufactured during the fourth quarter of the given year.

This limits the potential damage that a compromised private key may cause. If in the above case, the private key *sk*2 is inadvertently leaked out, only MCCBs manufactured during, say, the second quarter of the given year are affected. MCCBs manufactured during other time periods of the given year are not affected.

To further enhance security, the MCCB manufacturer may choose to generate even more unique paired sets of public and private keys, and associate each paired set of public and private keys with MCCBs manufactured during an even shorter and non-overlapping time period. For example, the MCCB manufacturer may choose to generate a total of 366 unique paired sets of public and private keys, and associates each paired set of public and private keys with MCCBs manufactured on each calendar day in the given year.

Create Digital Signature Code

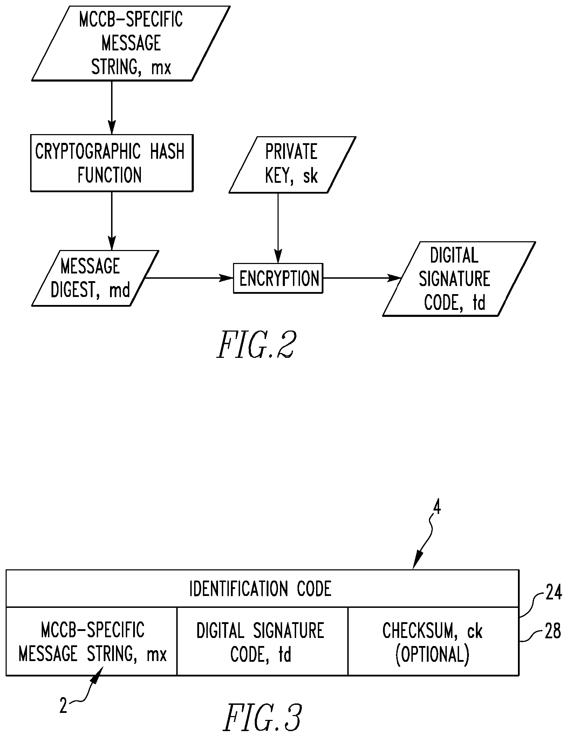

This step applies the previously generated private key, sk, to an MCCB-specific message string, *mx*, and produces a digital signature code, *td*, as an output. Fig. 2 shows a block diagram that illustrates steps to create digital signature code.

MCCB-Specific Message String

The MCCB-specific message string, *mx*, is a data string in the form of a finite sequence of characters with one or more fields that uniquely identify one individual MCCB. The MCCB-specific message string *mx* potentially may be hundreds or thousands of characters in length. The fields of the MCCB-specific message string *mx* can include one or more of:

- Style number
- Date code

- QPC code
- Serial number

[0038] The serial number is a unique number associated with the MCCB.

The MCCB-specific message string, *mx,* may include one or more additional MCCB-related fields, such as

- Region
- Product website address
- Service phone numbers and contact emails

The region is a string that may represent the MCCB's authorized sales region. For example, if an MCCB is intended for sale solely in the United States market, then the region string is appropriately marked with this information.

The MCCB-specific message string, *mx,* may further include one or more fields reserved for the MCCB manufacturer's internal use, such as

- MCCB current sensor attributes
- Engineering design revision numbers
- A random number

[0042] The MCCB current sensor attributes and engineering design revision numbers help the MCCB manufacturer track an MCCB's engineering and design information. The random number, similar to a cryptographic nonce, is assigned by the MCCB manufacturer to each MCCB to increase the randomness of the MCCB-specific message string, *mx.* Because of its lack of predictability, the random number helps deter malicious decoding and interpretation of the MCCB-specific message string, *mx.*

Cryptographic Hash Function

In this step, a cryptographic hash function is applied to the MCCB-specific message string, *mx,* and generates a message digest, *md.*

In this invention, the cryptographic hash function is a one-way mathematical function that converts the MCCB-specific message string, *mx,* into the message digest, *md,* which has a fixed number of bits despite its seemingly random content. One distinguishing feature of the cryptographic hash function is that it is practically infeasible to recreate the original MCCB-specific message string, *mx,* from the message digest, *md.* Another feature is that different message strings lead to different message digests.

There are a number of cryptographic hash functions that can be used to generate the message digest, *md,* from the MCCB-specific message string, *mx.* Secure hash algorithm 2 (SHA-2) (Secure Hash Standard (SHS), Federal Information Processing Standards Publication 180-4, National Institute of Standards and Technology, Aug. 2015, Link: http://dx.doi.org/10.6028/NIST.FIPS.180-4), (G. M. Lilly, "Device for and method of one-way cryptographic hashing," U.S. Patent 6 829 355, Dec. 7, 2004), and secure hash algorithm 3 (SHA-3) (SHA-3 Standard: Permutation-Based Hash and Extendable-Output Functions, Federal Information Processing Standards Publication 202, National Institute of Standards and Technology, Aug. 2015, Link: http://dx.doi.org/10.6028/NIST.FIPS.202), (G. Bertoni, J. Daemen, M. Peeters and G. Van Assche, The Keccak reference, round 3 submission to NIST SHA-3, 2011, http://keccak.noekeon.org/Keccak-reference-3.0.pdf) can be used. If SHA-2 is used, it can generate message digests up to 512 bits in length.

Digital Signature Code

This step uses the private key, sk, to encrypt the message digest, *md,* and outputs a digital signature code, *td.*

Depending on the method used to generate paired public and private keys, a corresponding encryption method can be applied to produce the digital signature code, *td.* For example, the paired public and private keys *pk, sk* may be generated by the RSA algorithm. Then the public key, *pk,* comprises two large positive integers, e and *n.* The corresponding private key, *sk,* also comprises two large positive integers *d* and *n,* in which $e \neq d$. It is noted that *pk* and *sk* share the same integer *n.* This integer *n* is known as the modulus in RSA algorithm.

By converting the message digest, *md,* to an integer, the digital signature code, *td,* is

$$td = (md)^{\mathrm{d}} \bmod n \quad (1)$$

where "mod" denotes a modulo, or remainder after division operation. That is, the remainder is what remains after a numerator is divided a whole number of times by a denominator. In a grossly simplified example, if *md=9, d=7,* and n= 143, then

$$td = (9)^{7} \bmod 143 = 48.$$

The number 48 is the digital signature code. That is, $(9)^7 \div 143 = 33447$ plus a remainder of 48, where 48 is the digital signature code.

Because the MCCB manufacturer holds the private key, *sk,* and never discloses it, and because anyone who obtains the public *key, pk,* cannot efficiently guess the MCCB manufacturer's private key, *sk,* only the MCCB manufacturer can produce a valid digital signature code, *td,* that is tied to a specific paired set of public and private keys *pk, sk.* In this way, a valid digital signature code proves that the message digest was in fact created by the MCCB manufacturer. An invalid digital signature code indicates a potential forgery of either the MCCB-specific message string, or the digital signature code itself.

## Build Security Tags and Install on MCCBs

This step takes the MCCB-specific message string, *mx,* and its matching digital signature code, *td,* as inputs, and generates an identification code as its output. The identification code is programmed into one or more security tags, and installed on the MCCB.

## Identification Code

The identification code includes the following components

- MCCB-specific message string, *mx*
- Digital signature code, *td*
- Checksum, *ck*

In the depicted exemplary embodiment, the MCCB-specific message string, *mx,* is in its original, plain-text form, and no encryption is applied to it. The digital signature code, *td,* is from equation 1. Fig. 3 shows the composition of such an identification code 2 as applied to a security tag 4 in accordance with a first embodiment of the disclosed and claimed concept.

The optional checksum, *ck,* data segment is a small segment of data that are computed from the MCCB-specific message string, *mx,* and the digital signature code, *td,* using a checksum function such as parity or cyclic redundancy check. The checksum, *ck,* is used to detect errors that may have been introduced during the identification code's storage or transmission. A well-designed identification code may be on the order of a few hundred to a few thousand bits.

## Security Tags

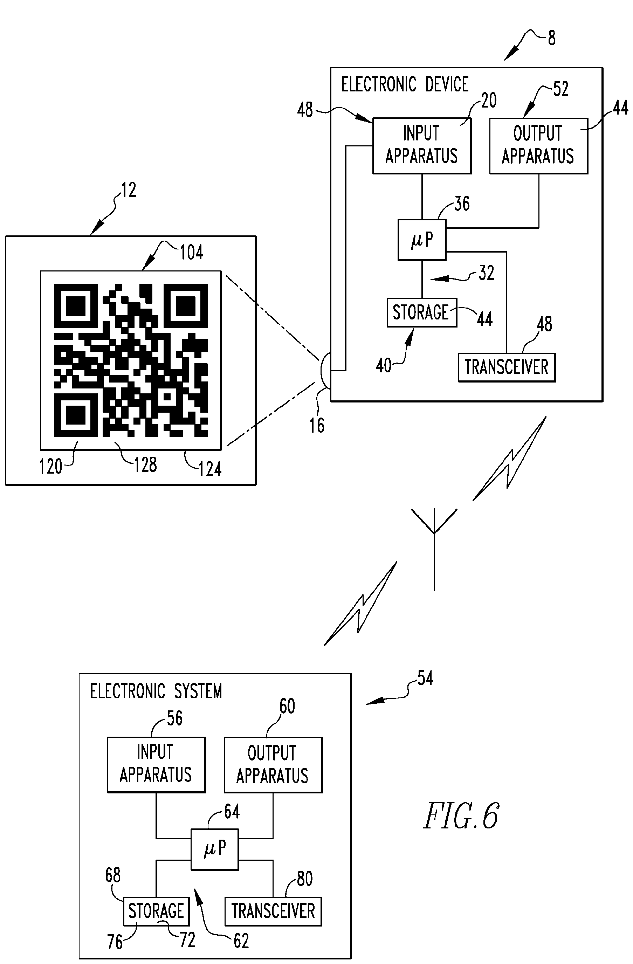

The security tag 4 serves as a storage medium for the identification code. The exemplary security tag 4 depicted in Fig. 3 is a Near-Field Communication (NFC) tag. Another security tag 104 that is in accordance with a second embodiment of the disclosed and claimed concept and which is depicted in Fig. 6 is quick response (QR) code tag. The exemplary NFC and QR security tags 4 and 104 are two exemplary types of storage media that can be used to hold the identification code, it being understood that many other types of storage media can be employed as a security tag. It is also understood that either or both of the security tags 4 and 104 can include both NFC and QR data thereon, which can be accomplished by providing two substrates for data storage, although the same can also be accomplished by using only a single such substrate to store both types of data.

The security tag 4 includes a substrate 24 upon which is situated a data storage area 28 structured to have data stored thereon and wherein the identification code is stored. The substrate 24 can be any material such as plastic, etc., upon which the storage area 28 can be disposed. The storage area is in the form of an electronic memory such as ROM or FLASH or the like without limitation. The security tag 4 also includes an antenna and other components that are well known as being a part of an NFC tag.

Near-Field Communication is a set of communication protocols that enable two electronic devices to establish communication by bringing them in close proximity, usually within a few centimeters, to each other. A typical NFC scheme involves an NFC initiator in the exemplary form of an electronic device 8, often a mobile device such as a smartphone or tablet, and a completely passive NFC tag. The NFC tag does not need any battery. Instead, the NFC tag uses the principle of electromagnetic coupling to capture a certain portion of the incident electromagnetic signal from the NFC initiator to power its electronic circuits.

The electronic device 8 includes a processor apparatus 32 that includes a processor 36 and a storage 40. The processor 36 can be any type of processor, such as a microprocessor or other processor without limitation. The storage 40 can be any type of storage such as RAM, ROM, EPROM, EEPROM, FLASH, and the like without limitation and operates as a machine readable storage medium. The storage 40 has stored therein a number of routines 44 in the form of instructions that are executable on the processor 36 to cause the electronic device 8 to perform various operations. The routines 44 include a number of algorithms such as are mentioned herein, as well as other algorithms. The electronic device 8 further includes an input apparatus 48 that provides input signals to the processor apparatus 32 and an output apparatus 52 that provides output signals to the processor apparatus 32. The output apparatus 52 includes a visual display 44 and can additionally or alternatively include other output devices such as audible output devices, tactile output devices, and the like without limitation.

In the NFC scheme, the NFC initiator generates a radio frequency (RF) field at a given frequency such as 13.56 MHz, and wirelessly transmits power through this RF field to the completely passive NFC tag via electromagnetic coupling. The NFC initiator then modulates the RF field to send commands to the passive NFC tag. In response, the NFC tag uses backward modulation to transmit data back to the NFC initiator. The NFC has been widely used in manufacturing, logistics, retail, public transit and even contactless mobile payment systems.

A QR code is a two-dimensional barcode that contains machine-readable information about the item to which it is attached. The QR code consists of black squares arranged in a square grid on a white background, and can be read and processed by a mobile device such as a smartphone or tablet. The QR code has also been widely used in manufacturing, logistics, marketing, public transit, and even landing permission stamps in passports.

Each type of media has its own advantages.

For example, NFC tags are weather- and heat-resistant, and usually hold more data with a smaller footprint. In contrast, QR codes are cost effective, and can be easily duplicated. There are also limitations associated with each type of media: NFC tags are generally more expensive than QR codes, and QR codes are often difficult to scan in low-light conditions.

Either type of storage media can be used as security tags. NFC tags that are used as security tags typically require a locking operation that makes the NFC tags read-only after the identification code has been programmed into them. This is to prevent unauthorized tampering of the identification code.

Install Security Tags on MCCB

After the identification code is programmed into it, the security tag 4 is affixed to an MCCB 12. An MCCB whose genuineness has not yet been verified or certified or both can be considered to be a questioned device. One identification code corresponds to one MCCB. Multiple security tags 4 can be installed on a single MCCB. These security tags shall hold the same identification code and thus be duplicates of one another that are limited in quantity.

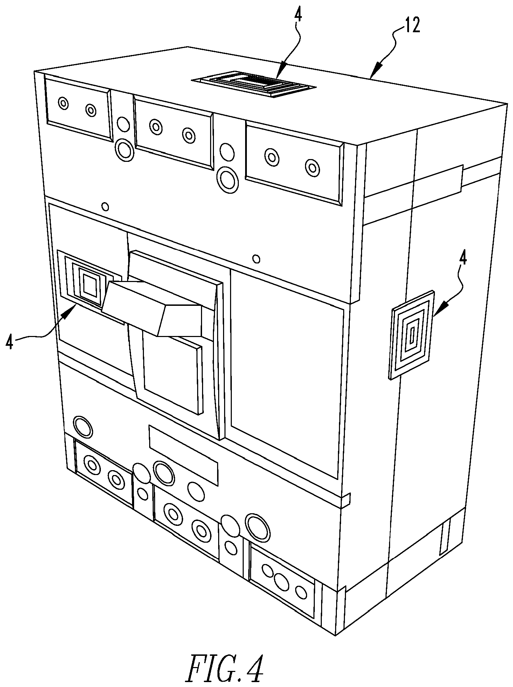

When NFC tags or QR codes are used as a part of the security tags 4, a certain orientation is required so that the identification code can be effectively read or scanned from them. To facilitate scanning and reading, multiple security tags 4 with the same identification code are typically installed onto multiple locations on the same MCCB 12. For example, in Fig. 4, a first security tag 4 can be molded into or attached to the front cover of the MCCB 12. A second security tag 4 that carries the same identification code can be molded into or attached to the right side cover of the same MCCB 12. A third security tag 4 that carries the same identification code can also be molded into or attached to the top cover of the same MCCB 12. More security tags with the same identification code can be molded into or attached to other parts of the MCCB 12 as needed, such as to the MCCB's base where the whole MCCB mechanism is attached.

In the above example, when an NFC initiator like a smartphone or tablet scans and reads the identification from the MCCB, the NFC initiator can either scan from a position that is close to the MCCB's front cover, and/or a position that is close to the MCCB's side cover. Similar scenarios also apply when QR codes are used as security tags.

Authenticate MCCBs

The following two steps are executed sequentially to authenticate MCCBs -- a verification step and a certification step.

The verification step reads the security tags and cryptographically verifies the identification code using the MCCB manufacturer's public key, *pk,* at the location of the MCCB 12. The certification step occurs remotely and determines whether the identification code has been previously compromised and certifies the MCCB's authenticity.

Verification Step

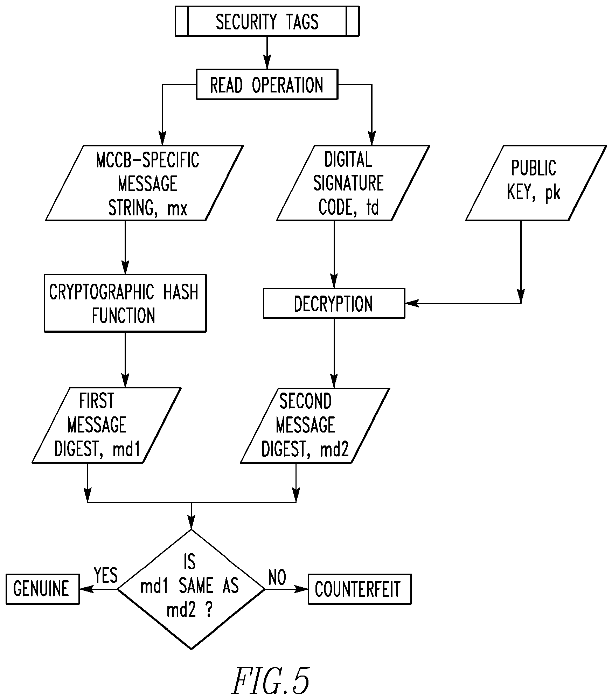

The verification step involves extracting the identification code from the one or more of the attached security tags 4, and determining whether the identification code contains a valid MCCB-specific message string and a valid corresponding digital signature code by using the MCCB manufacturer's public *key, pk.* Fig. 5 shows detailed steps to verify the identification code.

Read Security Tags

If an NFC tag is used as the security tag, extracting the identification code from the NFC tag is conducted on an initiator-talks-first basis. The NFC initiator, often a mobile device such as a smartphone or tablet, powers up the NFC tag wirelessly through the principle of electromagnetic coupling. Once the NFC tag is activated by the NFC initiator's signal, it waits for a command from the NFC initiator. The NFC initiator then sends the command by modulating the RF field, and NFC tag replies to this command by modulating the RF field, i.e., load modulation. The NFC initiator senses the NFC tag's modulated RF field, and interprets the response message. By repeating this process, the identification code carried in the NFC tag is extracted.

When a QR code 120 is used, such as in the security tag 104, extracting the identification code from the QR code is conducted by optically scanning the QR code. The security tag 104 includes a substrate 124 having a data storage area that is structured to have data stored thereon and that is in the exemplary form of an imprintable area 128 on which the QR code 120 is printed or otherwise applied. The substrate 124 can be any of a wide variety of paper or plastic materials or other materials that can be affixed to the MCCB 12 and upon which the QR code 120 can be imprinted. A QR scanning device is most typically incorporated on a mobile device such as the electronic device 8 or other device such as a smartphone or tablet that is equipped with a camera 16 that serves as a QR scanner that optically scans the QR code and retrieves the identification code carried in the QR code. In the depicted exemplary embodiment, the electronic device 8 further includes an NFC initiator 20 that is a part of the input apparatus 48. The NFC initiator or QR scanner can also be a dedicated device with either the NFC reader or the QR code scanner. The electronic device 8 further includes a transceiver 48 that is connected with the processor 36 and that enables the electronic device to communicate wirelessly with an electronic system 54 as will be described in greater detail below.

Verify Identification Code

Given the identification code obtained from the security tag 4 or 104, a verification algorithm stored in the storage 40 returns "accepted" when the identification code's MCCB-specific message string and the digital signature code are considered to be a "match" as set forth in greater detail below. The verification algorithm returns "rejected" when the MCCB-specific message string and the digital signature code do not form a "match".

If the identification code's checksum is available, then the first step is to check the identification code's integrity. The identification code's MCCB-specific message string and digital signature code are passed through the same checksum function as the one used to create the identification code. If the checksum generated in this step matches the identification code's checksum, it confirms the identification code's integrity. Otherwise, the identification code needs to be read again from the security tag to correct any errors. Note that this step can be skipped if the checksum is unavailable.

The next step is to pass the MCCB-specific message string through the same cryptographic hash function as the one used to create the digital signature code. The output of this step is a first message digest, $md1$.

The third step is to use the MCCB manufacturer's public key, $pk$, which comprises two large positive integers, $e$ and $n$, in a decryption operation to decrypt the digital signature code, $td$, and obtain a second message digest, $md2$.

For example, using the RSA aforementioned algorithm, the second message digest $md2$ is computed via

$$md2 = (td)^e \bmod n \quad (2)$$

The MCCB manufacturer's public key, $pk$, shall be obtained through a trustworthy channel, such as through the MCCB manufacturer's official website, or from software programs or mobile apps authorized by the MCCB manufacturer.

The last step is to compare the first message digest, $md1$, to the second message digest, $md2$. If $md1$ equals $md2$, this is a "match" which verifies that the identification code was genuinely created by the MCCB manufacturer. If $md1$ is different from $md2$, this is not a "match", which demonstrates that the identification code was not genuinely created by the MCCB manufacturer.

The above verification operation helps detect unauthorized product tampering. Referring to Fig. 4 when an unauthorized third-party tampers with and refurbishes MCCBs from scavenged or counterfeited parts outside of original MCCB manufacturer operated facilities, such as the front cover is refurbished from one genuine MCCB, and the side cover from another genuine MCCB, then the security tags attached to the front and side covers will not match each other. This helps detect tampering and unauthorized refurbishment of MCCBs. As such, a part of the verification operation may be to subject each of the security tags 4 or 104 on the MCCB 12 to the verification algorithm.

Certification Step

In practice, security tags with genuine identification codes potentially may be duplicated without authorization. In this case, the unauthorized duplicated identification codes are compromised. The certification step is intended to detect unauthorized duplication of security tags by checking whether the identification code contained in the security tags has been previously compromised.

To perform a check, the identification code is compared to a list of compromised identification codes. This list is also known as the revocation list. If the identification code is found in the revocation list, then it is compromised, and the security tags that contain this identification code are also regarded as compromised. If the identification code is not found in the revocation list, then a certificate of authenticity may be shown to demonstrate that the MCCB is genuine. The certificate of authenticity can be communicated to users such as via a message displayed in the software programs or mobile apps, an email, or a text message.

The electronic system 54 noted above is remote from the electronic device 8, whether by being separated by a few meters or by being separated by thousands of miles. The electronic system 54 includes an input apparatus 56, an output apparatus 60, and a processor apparatus 62. The input apparatus 56 provides input signals to the processor apparatus 62, and the output apparatus 60 receives output signals from the processor apparatus 62. The processor apparatus 62 includes a processor 64 and a storage 68 that are in communication with one another. The processor 64 can be any of a wide variety of processing devices, such as a microprocessor or other such processor. The storage 68 can be any of a wide variety of storage devices such as are noted elsewhere herein. The storage 68 has stored therein a number of routines 72 that are in the form of instructions that are executable on the processor 64 to cause the electronic system 54 to perform certain operations. The storage 68 further has a revocation list 76 stored therein. The electronic system 54 further includes a transceiver 80 that enables it to communicate wirelessly or in other ways to or with the electronic device 8.

The revocation list 76 is compiled from a number of sources, such as NFC initiator or QR scanner's device-specific data, and geographic locations (if available) associated with the NFC initiator or QR scanner. The revocation list 76 can be hosted at an MCCB manufacturer-owned server, or a third-party server authorized by the MCCB manufacturer, and is constantly updated. To perform an identification code check, an online access from the NFC initiator 20 or QR scanner 16 of the electronic device 8, via the transceivers 48 and 80, to the revocation list 76 is required.

The verification and certification steps can be used to detect potential gray market MCCBs. In this case, the geographic location of the NFC initiator or QR scanner is regarded as the actual geographic location of the scanned MCCB, and the actual geographic location is compared with the region field extracted from the identification code's MCCB-specific message string. The region field identifies the intended geographic location for the MCCB. If the geographic location does not agree with the region field, then the MCCB can be marked as a potential gray market item. For example, if the geographic location indicates that the MCCB is located in a country in North America, while the region field indicates that the MCCB is intended for sale solely in Europe, the Middle East and Africa market, then the MCCB can be marked as a potential gray market item for further investigation, and this may include adding to the revocation list 76 a data entry indicating that the security tag 4 is or may be compromised. Likewise, if the same security tag 4 is allegedly identified in two different geographic locations, this could indicate that the security tag 4 was copied and thus is compromised. Similarly, if the same identification code has been received more than a predetermined number of times within a predetermined period of time, this could indicate that the security tag 4 was copied and thus is compromised.

At the end of the certification operation, the electronic system 54 can communicate to the electronic device 8 a data file that includes a set of market data that includes either that the actual geographic location of the questioned device is legitimate or that the actual geographic location of the questioned device is illegitimate.

In addition to detecting unauthorized tampering and potential gray market MCCBs, the verification and certification steps can also be used to detect counterfeit MCCBs. In this case, because counterfeiters do not possess the MCCB manufacturer's private key, *sk,* they cannot forge valid identification codes. The MCCBs produced by counterfeiters either do not have valid identification codes, or they have a valid but compromised identification code that is duplicated from a genuine MCCB. In the former case, it is easy to detect the absence of valid identification codes using NFC initiators or QR scanners. In the latter case, when the valid but compromised identification code is checked against the revocation list, the counterfeit MCCBs can also be detected.

By incorporating digital signature codes into MCCBs, this invention provides traceability of original MCCB manufacturer's products. Successful verification and certification give users confidence to trust the MCCBs' integrity and authenticity. Users can further identify whether the MCCBs are potential gray market items by examining the contents of valid identification codes.

Through the use of NFC tags and initiator, or QR codes and scanners, this invention automates the verification and certification process. Through the use software programs or mobile apps, this invention also provides easy-to-navigate verification and certification processes to the users. In this way, this invention helps reduce the amount of effort that ordinary users have to spend when determining the MCCB's integrity and authenticity. This further helps eliminate risks, liabilities, safety- and performance-related issues, and even a complete business shutdown that may occur when using tampered, counterfeit, or gray-market MCCBs.

While specific embodiments of the disclosed concept have been described in detail, it will be appreciated by those skilled in the art that various modifications and alternatives to those details could be developed in light of the overall teachings of the disclosure.

**Claims**

1. A method of verifying a genuineness of a questioned device, the method performed by an electronic device (8), the method comprising:

   reading an identification code from a data storage area (28, 128) situated on a substrate (24, 124) of a security tag comprising a substrate (24, 124) affixed to the questioned device, wherein the identification code comprises:

   > a checksum data segment;
   > a data string comprising data that is representative of a serial number of the questioned device and at least one of:
   >
   > > a style number of the questioned device;
   > > a date code of the questioned device;
   > > a geographical region where the questioned device can be sold;
   > > a website address related to the questioned device;
   > > a telephone number for service related to the questioned device;
   > > an email for service related to the questioned device;
   > > a number of sensor attributes of the questioned device; and
   > > an engineering design revision number of the questioned device; the identification code further comprising:
   > > a signature code based, at least in part, on the data string and a private key, the private key contemporaneously generated, by an asymmetric key generation algorithm, with a public key corresponding with the private key;
   >
   > subjecting at least the data string and the signature code to a checksum operation and using the checksum data segment to detect whether an error occurred in at least one of:

communication of the identification code to the security tag, and

storage of the identification code on the security tag;

subsequent to the subjecting of at least the data string and the signature code to the checksum operation, subjecting the data string to a hash operation to result in a message digest; subjecting the signature code to a decryption operation using the public key to result in another message digest; responsive to a determination that the message digest and the another message digest are the same, verifying the questioned device as being genuine; and responsive to a determination that the message digest and the another message digest are not the same, identifying the questioned device as being other than genuine.

2. The method of claim 1, wherein the method further comprises:
   outputting, on the electronic device, an indication representative of the respective determination.

3. The method of claim 1, wherein reading the identification code comprises:
   employing near field communication, NFC, data communications to wirelessly communicate the identification code to the electronic device.

4. The method of claim 1, wherein reading the identification code comprises:
   optically reading the identification code from the security tag.

5. The method of claim 1, wherein the method further comprises:

   communicating at least a portion of the identification code to an electronic system (54) for comparison with a revocation list (76) that comprises information representative of a number of devices whose genuineness has been compromised; receiving from the electronic system a response that includes data representative of at least one of:

   the questioned device is genuine, and the genuineness of the questioned device has been compromised; and

   outputting, on the electronic device, an indication representative of the respective response.

6. The method of claim 5, wherein the method further comprises:

communicating data representative of an actual geographic location of the questioned device to the electronic system for comparison of the actual geographic location with an intended geographic location of the questioned device; and receiving from the electronic system as part of the response a set of market data that is representative of at least one of:

   the actual geographic location of the questioned device is legitimate, and the actual geographic location of the questioned device indicates a gray market sale; and

   outputting, on the electronic device, an indication representative of the respective set of market data.

7. A security tag (4, 104) for verifying a genuineness of a questioned device according to the method of any one of claims 1 to 6, the security tag comprising:

   a substrate (24, 124) configured to affix the security tag (4, 104) to the questioned device; and a data storage area (28, 128) situated on the substrate (24, 124) and configured to store data thereon; wherein the data stored in the data storage area (28, 128) comprises: an identification code comprising:

   a data string comprising data that is representative of a serial number of the questioned device and at least one of:

   a style number of the questioned device; a date code of the questioned device; a geographical region where the questioned device can be sold; a website address related to the questioned device; a telephone number for service related to the questioned device; an email for service related to the questioned device; a number of sensor attributes of the questioned device; and an engineering design revision number of the questioned device;

   the identification code further comprising: a signature code based, at least in part, on the data string and a private key, the private key contemporaneously generated, by an asymmetric key generation algorithm, with a public key corresponding with the private key;

**characterized in that** the identification code further comprises:

a checksum data segment that is based at least in part upon subjecting at least the data string and the signature code to a checksum operation, the checksum data segment being usable to detect whether an error occurred.

8. The security tag (4, 104) of claim 7 wherein the substrate (24, 124) comprises a near field communication, NFC, tag configured to wirelessly communicate the identification code to an electronic device, the NFC tag having as the data storage area (28, 128) an electronic data storage area (28).

9. The security tag (4, 104) of claim 7 wherein the substrate (24, 124) comprises a label that is optically readable by an electronic device to communicate the identification code to the electronic device, the label having as the data storage area an imprintable area (128), and the identification being in the form of imprinted subject-matter.

10. An electronic system comprising: an electronic device (8) to perform the method steps according to any one of claims 1 to 6, and one or more security tags according to any of claims 7 to 9.

11. A machine readable storage medium (40) comprising instructions (44), which, when executed by a processor (36), cause the processor of an electronic device (8) to perform the method according to any one of claims 1 to 6.

**Patentansprüche**

1. Verfahren zum Verifizieren einer Echtheit einer infrage gestellten Vorrichtung, wobei das Verfahren durch eine elektronische Vorrichtung (8) durchgeführt wird, das Verfahren umfassend:
Lesen eines Identifikationscodes aus einem Datenspeicherbereich (28, 128), der sich an einem Substrat (24, 124) eines Sicherheitstags, umfassend ein Substrat (24, 124), das an der infrage gestellten Vorrichtung befestigt ist, befindet, wobei der Identifikationscode umfasst:

ein Prüfsummendatensegment;
einen Datenstring, umfassend Daten, die für eine Seriennummer der infrage gestellten Vorrichtung repräsentativ sind und mindestens eines von:

einer Bauartnummer der infrage gestellten Vorrichtung;
einem Datumscode der infrage gestellten Vorrichtung;

einer geografischen Region, wo die infrage gestellte Vorrichtung verkauft werden kann;
einer Webseitenadresse, die sich auf die infrage gestellte Vorrichtung bezieht;
einer Telefonnummer für einen Dienst, die sich auf die infrage gestellte Vorrichtung bezieht;
einer E-Mail für den Dienst, die sich auf die infrage gestellte Vorrichtung bezieht;
einer Anzahl von Sensorattributen der infrage gestellten Vorrichtung; und
einer Revisionsnummer eines konstruktiven Entwurfs der infrage gestellten Vorrichtung;
der Identifikationscode ferner umfassend:

einen Signaturcode, basierend, mindestens teilweise, auf dem Datenstring und einem privaten Schlüssel, wobei der private Schlüssel, durch einen asymmetrischen Schlüsselerzeugungsalgorithmus, mit einem öffentlichen Schlüssel, der dem privaten Schlüssel entspricht, gleichzeitig erzeugt wird;
Unterziehen, mindestens des Datenstrings und des Signaturcodes, einer Prüfsummenoperation und Verwenden des Prüfsummendatensegments, um zu erkennen, ob ein Fehler in mindestens einem aufgetreten ist von:

Kommunizieren des Identifikationscodes an das Sicherheitstag und Speichern des Identifikationscodes auf dem Sicherheitstag; anschließend an das Unterziehen, mindestens des Datenstrings und des Signaturcodes, der Prüfsummenoperation, Unterziehen, des Datenstrings, einer Hash-Operation, um einen Nachrichtendigest zu ergeben;
Unterziehen, des Signaturcodes, einer Entschlüsselungsoperation unter Verwendung des öffentlichen Schlüssels, um einen anderen Nachrichtendigest zu ergeben;
als Reaktion auf eine Bestimmung, dass der Nachrichtendigest und der andere Nachrichtendigest gleich sind, Verifizieren der infrage gestellten Vorrichtung als echt; und
als Reaktion auf eine Bestimmung, dass der Nachrichtendigest und der andere Nachrichtendigest nicht gleich sind, Identifizieren der infrage gestellten Vorrichtung als anders als echt.

2. Verfahren nach Anspruch 1, wobei das Verfahren ferner umfasst:
Ausgeben, an der elektronischen Vorrichtung, einer Angabe, die für die jeweilige Bestimmung repräsentativ ist.

3. Verfahren nach Anspruch 1, wobei das Lesen des Identifikationscodes umfasst:
Verwenden von Nahfeldkommunikationsdatenkommunikationen, NFC-Datenkommunikationen, um den Identifikationscode an die elektronische Vorrichtung drahtlos zu kommunizieren.

4. Verfahren nach Anspruch 1, wobei das Lesen des Identifikationscodes umfasst: optisches Lesen des Identifikationscodes aus dem Sicherheitstag.

5. Verfahren nach Anspruch 1, wobei das Verfahren ferner umfasst:

Kommunizieren mindestens eines Abschnitts des Identifikationscodes an ein elektronisches System (54) für einen Vergleich mit einer Widerrufsliste (76), die Informationen umfasst, die für eine Anzahl von Vorrichtungen, deren Echtheit kompromittiert wurde, repräsentativ sind;
Empfangen, aus dem elektronischen System, einer Antwort, die Daten einschließt, die für mindestens eines repräsentativ sind von:

die infrage gestellte Vorrichtung ist echt und die Echtheit der infrage gestellten Vorrichtung wurde kompromittiert; und

Ausgeben, an der elektronischen Vorrichtung, einer Angabe, die für die jeweilige Antwort repräsentativ ist.

6. Verfahren nach Anspruch 5, wobei das Verfahren ferner umfasst:

Kommunizieren von Daten, die für einen tatsächlichen geografischen Ort der infrage gestellten Vorrichtung repräsentativ sind, an das elektronische System für den Vergleich des tatsächlichen geografischen Ortes mit einem beabsichtigten geografischen Ort der infrage gestellten Vorrichtung; und
Empfangen, aus dem elektronischen System als Teil der Antwort, eines Satzes von Marktdaten, der für mindestens eines repräsentativ ist von:

der tatsächliche geografische Ort der infrage gestellten Vorrichtung ist legitim und

der tatsächliche geografische Ort der infrage gestellten Vorrichtung gibt einen Verkauf auf einem grauen Markt an; und
Ausgeben, an der elektronischen Vorrichtung, einer Angabe, die für den jeweiligen Satz von Marktdaten repräsentativ ist.

7. Sicherheitstag (4, 104) zum Verifizieren einer Echtheit einer infrage gestellten Vorrichtung gemäß dem Verfahren nach einem der Ansprüche 1 bis 6, das Sicherheitstag umfassend: ein Substrat (24, 124), das konfiguriert ist, um das Sicherheitstag (4, 104) an der infrage gestellten Vorrichtung zu befestigen; und

einen Datenspeicherbereich (28, 128), der sich an dem Substrat (24, 124) befindet und konfiguriert ist, um Daten darauf zu speichern;
wobei die Daten, die in dem Datenspeicherbereich (28, 128) gespeichert sind, umfassen: einen Identifikationscode, umfassend:
einen Datenstring, umfassend Daten, die für eine Seriennummer der infrage gestellten Vorrichtung repräsentativ sind und mindestens eines von:

einer Bauartnummer der infrage gestellten Vorrichtung;
einem Datumscode der infrage gestellten Vorrichtung;
einer geografischen Region, wo die infrage gestellte Vorrichtung verkauft werden kann;
einer Webseitenadresse, die sich auf die infrage gestellte Vorrichtung bezieht;
einer Telefonnummer für den Dienst, die sich auf die infrage gestellte Vorrichtung bezieht;
einer E-Mail für den Dienst, die sich auf die infrage gestellte Vorrichtung bezieht;
einer Anzahl von Sensorattributen der infrage gestellten Vorrichtung; und
einer Revisionsnummer des konstruktiven Entwurfs der infrage gestellten Vorrichtung;
der Identifikationscode ferner umfassend:

einen Signaturcode, basierend, mindestens teilweise, auf dem Datenstring und einem privaten Schlüssel, wobei der private Schlüssel, durch einen asymmetrischen Schlüsselerzeugungsalgorithmus, mit einem öffentlichen Schlüssel, der dem privaten Schlüssel entspricht, gleichzeitig erzeugt wird;
**dadurch gekennzeichnet, dass** der Identifikationscode ferner umfasst:
ein Prüfsummendatensegment, das mindestens teilweise auf dem Unterziehen, mindestens des Datenstrings und des Signaturcodes, einer Prüfsummenoperation basiert, wobei das Prüfsummendatensegment verwendbar ist, um zu erkennen, ob ein Fehler aufgetreten ist.

8. Sicherheitstag (4, 104) nach Anspruch 7, wobei das Substrat (24, 124) ein Nahfeldkommunikationstag, NFC-Tag, umfasst, das konfiguriert ist, um den Identifikationscode an eine elektronische Vorrichtung drahtlos zu kommunizieren, wobei das NFC-Tag als den Datenspeicherbereich (28, 128) einen elektronischen Datenspeicherbereich (28) aufweist.

9. Sicherheitstag (4, 104) nach Anspruch 7, wobei das Substrat (24, 124) ein Etikett umfasst, das durch eine elektronische Vorrichtung optisch lesbar ist, um den Identifikationscode an die elektronische Vorrichtung zu kommunizieren, wobei das Etikett als den Datenspeicherbereich einen bedruckbaren Bereich (128) aufweist und die Identifikation in der Form eines bedruckten Gegenstands vorliegt.

10. Elektronisches System, umfassend:

eine elektronische Vorrichtung (8), um die Verfahrensschritte nach einem der Ansprüche 1 bis 6 durchzuführen und
einen oder mehrere Sicherheitstags nach einem der Ansprüche 7 bis 9.

11. Maschinenlesbares Speichermedium (40), umfassend Anweisungen (44), die, wenn sie durch einen Prozessor (36) ausgeführt werden, den Prozessor einer elektronischen Vorrichtung (8) veranlassen, das Verfahren nach einem der Ansprüche 1 bis 6 durchzuführen.

**Revendications**

1. Procédé de vérification de l'authenticité d'un dispositif contesté, le procédé étant mis en oeuvre par un dispositif électronique (8), le procédé comprenant :
la lecture d'un code d'identification à partir d'une zone de stockage de données (28, 128) située sur un substrat (24, 124) d'une étiquette de sécurité comprenant un substrat (24, 124) apposé sur le dispositif contesté, dans lequel le code d'identification comprend :

un segment de données de somme de contrôle ;
une chaîne de données comprenant des données représentant un numéro de série du dispositif contesté et au moins l'un parmi :

un numéro de style du dispositif contesté ;

un code de date du dispositif contesté ;
une région géographique où le dispositif contesté peut être vendu ;
une adresse de site web relatif au dispositif contesté ;
un numéro de téléphone pour le service après-vente relatif au dispositif contesté ;
une adresse e-mail du service après-vente relatif au dispositif contesté ;
un nombre d'attributs de capteur du dispositif contesté ; et
un numéro de révision de la conception technique du dispositif contesté ;
le code d'identification comprenant en outre :

un code de signature basé, au moins en partie, sur la chaîne de données et une clé privée, la clé privée étant générée simultanément, par un algorithme de génération de clé asymétrique, avec une clé publique correspondant à la clé privée ;
la soumission d'au moins la chaîne de données et le code de signature à une opération de somme de contrôle et l'utilisation du segment de données de somme de contrôle pour détecter si une erreur s'est produite dans au moins l'un parmi :

la communication du code d'identification à l'étiquette de sécurité, et le stockage du code d'identification sur l'étiquette de sécurité ;
suite à la soumission d'au moins la chaîne de données et du code de signature à l'opération de somme de contrôle, la soumission de la chaîne de données à une opération de hachage pour obtenir un condensé de message ;
la soumission du code de signature à une opération de déchiffrement à l'aide de la clé publique pour obtenir un autre condensé de message ;
en réponse à une détermination que le condensé de message et l'autre condensé de message sont les mêmes, la vérification de l'authenticité du dispositif contesté ; et
en réponse à une détermination que le condensé de message et l'autre condensé de message ne sont pas identiques, l'identification du dispositif contesté comme n'étant pas authentique.

2. Procédé selon la revendication 1, dans lequel le procédé comprend en outre :
la sortie, sur le dispositif électronique, d'une indication représentant la détermination respective.

3. Procédé selon la revendication 1, dans lequel la lecture du code d'identification comprend :
l'utilisation de communications de données en champ proche, NFC, pour communiquer sans fil le code d'identification au dispositif électronique.

4. Procédé selon la revendication 1, dans lequel la lecture du code d'identification comprend :
la lecture optique du code d'identification à partir de l'étiquette de sécurité.

5. Procédé selon la revendication 1, dans lequel le procédé comprend en outre :

la communication d'au moins une partie du code d'identification à un système électronique (54) pour comparaison avec une liste de révocation (76) qui comprend des informations représentant un nombre de dispositifs dont l'authenticité a été compromise ;
la réception à partir du système électronique d'une réponse qui comporte des données représentant au moins l'un parmi :

le dispositif contesté est authentique, et l'authenticité du dispositif contesté a été compromise ; et

la sortie, sur le dispositif électronique, d'une indication représentant la réponse respective.

6. Procédé selon la revendication 5, dans lequel le procédé comprend en outre :

la communication de données représentant une localisation géographique réelle du dispositif contesté au système électronique pour comparaison de la localisation géographique réelle avec une localisation géographique prévue du dispositif contesté ; et
la réception à partir du système électronique en tant que partie de la réponse d'un ensemble de données de marché représentant au moins l'un parmi :

la localisation géographique réelle du dispositif contesté est légitime, et
la localisation géographique réelle du dispositif contesté indique une vente sur le marché gris ; et
la sortie, sur le dispositif électronique, d'une indication représentant l'ensemble respectif de données de marché.

7. Étiquette de sécurité (4, 104) pour vérifier l'authenticité d'un dispositif contesté selon le procédé de l'une quelconque des revendications 1 à 6, l'étiquette de sécurité comprenant :

un substrat (24, 124) conçu pour apposer l'étiquette de sécurité (4, 104) sur le dispositif contesté ; et
une zone de stockage de données (28, 128) située sur le substrat (24, 124) et configurée pour stocker des données ;
dans laquelle les données stockées dans la zone de stockage de données (28, 128) comprennent :
un code d'identification comprenant :
une chaîne de données comprenant des données représentant un numéro de série du dispositif contesté et au moins l'un parmi :

un numéro de style du dispositif contesté ;
un code de date du dispositif contesté ;
une région géographique où le dispositif contesté peut être vendu ;
une adresse de site web relatif au dispositif contesté ;
un numéro de téléphone pour le service après-vente relatif au dispositif contesté ;
une adresse e-mail du service après-vente relatif au dispositif contesté ;
un nombre d'attributs de capteur du dispositif contesté ; et
un numéro de révision de la conception technique du dispositif contesté ;
le code d'identification comprenant en outre :

un code de signature basé, au moins en partie, sur la chaîne de données et une clé privée, la clé privée étant générée simultanément, par un algorithme de génération de clé asymétrique, avec une clé publique correspondant à la clé privée ;
caractérisée en ce que le code d'identification comprend en outre :
un segment de données de somme de contrôle qui est basé au moins en partie sur la soumission d'au moins la chaîne de données et le code de signature à une opération de somme de contrôle, le segment de données de somme de contrôle étant utilisable pour détecter si une erreur s'est produite.

8. Étiquette de sécurité (4, 104) selon la revendication 7, dans laquelle le substrat (24, 124) comprend une étiquette de communication en champ proche, NFC, configurée pour communiquer sans fil le code d'identification à un dispositif électronique, l'étiquette NFC ayant comme zone de stockage de données (28, 128) une zone de stockage de données électronique (28).

9.  Étiquette de sécurité (4, 104) selon la revendication 7, dans laquelle le substrat (24, 124) comprend une étiquette qui est lisible optiquement par un dispositif électronique pour communiquer le code d'identification au dispositif électronique, l'étiquette ayant comme zone de stockage de données une zone imprimable (128), et l'identification étant sous la forme d'un objet imprimé.

10. Système électronique comprenant :

    un dispositif électronique (8) pour mettre en oeuvre les étapes du procédé selon l'une quelconque des revendications 1 à 6, et
    une ou plusieurs étiquettes de sécurité selon l'une quelconque des revendications 7 à 9.

11. Support de stockage lisible par machine (40) comprenant des instructions (44), qui, lorsqu'elles sont exécutées par un processeur (36), amènent le processeur d'un dispositif électronique (8) à mettre en oeuvre le procédé selon l'une quelconque des revendications 1 à 6.

*FIG.1*

EP 3 432 179 B1

*FIG.2*

*FIG.3*

FIG.4

FIG.5

FIG.6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 2014252077 A1
- US 8941469 B1
- US 8587411 B1
- US 4405829 A, R. L. Rivest, A. Shamir, and L. M. Adleman
- US 5231668 A, D. W. Kravitz
- US 6829355 B, G. M. Lilly

### Non-patent literature cited in the description

- *EPC Radio-Frequency Identity Protocols Generation-2 UHF RFID Specification for RFID Air Interface, Protocol for Commnuications at 860MHz-960MHz, Version 2.0.0 Ratified,* 01 November 2013
- IEEE Standard Specifications for Public-Key Cryptography. *IEEE Std. 1363-2000,* January 2000
- **R. L. RIVEST ; A. SHAMIR ; L. ADLEMAN.** A method for obtaining digital signatures and public-key cryptosystems. *Communications of the ACM,* February 1978, vol. 21 (2), 120-126
- **N. KOBLITZ.** Elliptic curve cryptosystems. *Mathematics of Computation,* January 1987, vol. 48 (177), 203-209
- Use of elliptic curves in cryptography. **V. S. MILLER.** Lecture Notes in Computer Science. Springer-Verlag, 1985, vol. 218, 417-426
- Secure Hash Standard (SHS), Federal Information Processing Standards Publication 180-4. National Institute of Standards and Technology, August 2015
- SHA-3 Standard: Permutation-Based Hash and Extendable-Output Functions. Federal Information Processing Standards Publication 202. National Institute of Standards and Technology, August 2015
- **G. BERTONI ; J. DAEMEN ; M. PEETERS ; G. VAN ASSCHE.** *The Keccak reference,* 2011, http://keccak.noekeon.org/Keccak-reference-3.0.pdf